# EUROPÄISCHE PATENTSCHRIFT

(11) **EP 0 835 399 B1**
(45) Veröffentlichungstag und Bekanntmachung des Hinweises auf die Patenterteilung: **03.11.1999**
(21) Anmeldenummer: 96924810.3
(22) Anmeldetag: 28.06.1996
(51) Int. Cl.: F16J 15/12

(54) **FLACHDICHTUNG UND VERFAHREN ZU IHRER HERSTELLUNG**
FLAT GASKET RING AND METHOD OF PRODUCING THE SAME
GARNITURE D'ETANCHEITE PLATE ET SON PROCEDE DE PRODUCTION

(30) Priorität: 29.06.1995 DE 19523759
(43) Veröffentlichungstag der Anmeldung: 15.04.1998
(73) Patentinhaber: Stecher, Friedhelm, 26386 Wilhelmshaven (DE)
(72) Erfinder: Stecher, Friedhelm, 26386 Wilhelmshaven (DE)
(74) Vertreter: Tomerius, Isabel, Dr. Dipl.-Chem.
(86) Internationale Anmeldenummer: EP9602839
(87) Internationale Veröffentlichungsnummer: WO9701722

(56) Entgegenhaltungen:
- DE-A- 4 240 661
- DE-B- 1 219 302
- US-A- 2 127 372

## Beschreibung

Die Erfindung betrifft Flachdichtungen, die beispielsweise als Zylinderkopfdichtungen oder Auspuffdichtungen verwendet werden können.

Derartige Flachdichtungen müssen sich einerseits beim Einbau an die Unebenheiten der abzudichtenden Flächen anpassen (Mikroabdichtung) und andererseits im Dauerbetrieb die Vorspannung durch die Schraubenkräfte ohne weitere Verformung aufnehmen.
Zur Verbesserung der Mikroabdichtung können die Flachdichtungen mit einer weicheren Deckschicht versehen sein, die aus einem weicheren Metall oder aus Kunststoff besteht. Um eine verbesserte Abdichtung zu erzielen, sollte die Beschichtung einerseits so weich sein, daß sie sich im kalt-statischen Zustand bereits während des Einbaus gut an die Unebenheiten der abzudichtenden Gegenflächen anpaßt. Andererseits sollte die Dichtungswirkung auch noch im späteren Betrieb über möglichst lange Laufzeiten fortbestehen. Bei dynamisch stark beanspruchten Dichtungen, wie Zylinderkopfdichtungen oder Auspuffdichtungen, die bei hoher Temperatur und starker Druckbelastung arbeiten, neigen zu weiche Beschichtungen jedoch dazu, wegzufließen, so daß eine zufriedenstellende Abdichtung nicht mehr gewährleistet ist. Es bestand also Bedarf an Flachdichtungen, die unter den genannten Bedingungen zu einer guten Abdichtung führen.

**Aufgabe** der Erfindung war es daher, Flachdichtungen zur Verfügung zu stellen, die sich bereits beim Einbau an die abzudichtenden Gegenflächen anpassen und zu einer guten Mikroabdichtung führen und auch im späteren Betrieb selbst bei hoher Flächenpressung und hoher Temperatur ihre Dichtfähigkeit nicht verlieren.

Diese Aufgabe wird durch die Flachdichtung gemäß Patentanspruch 1 gelöst. Weitere Ausgestaltungen der erfindungsgemäßen Flachdichtungen sind in den abhängigen Ansprüchen 2 bis 21 beschrieben.

In den Ansprüchen 22-25 wird ein Verfahren zur Erzeugung einer Prägeform für eine erfindungsgemäße Flachdichtung beschrieben.

Der Begriff "Flachdichtung" umfaßt hier einerseits sowohl einstückige als auch mehrstückige Dichtungen wie beispielsweise zusammengesetzte Metalldichtungen und Weichstoffdichtungen mit Metalleinfassung um die abzudichtenden Öffnungen. Andererseits bezieht sich der Begriff zum einen auf solche Flachdichtungen, die sich den wechselnden Druckbelastungen während des Betriebs elastisch anpassen, als auch auf Dichtungen aus druckfestem Material, die unter Betriebsbedingungen nicht dickenverformbar sind. Üblicherweise bestehen die erfindungsgemäßen Dichtungen aus Metall, beispielsweise Aluminium. Sie können jedoch ebenfalls aus hitzebeständigem Kunststoff oder ähnlichen Materialien hergestellt sein.

Die erfindungsgemäßen Dichtungen zeichnen sich dadurch aus, daß sie im Bereich ihrer Hauptdichtflächen eine oder mehrere Hochpressungslinien, im folgenden als Dichtstege bezeichnet, aufweisen. Diese Dichtstege sind verglichen mit den Hauptdichtflächen sehr klein und bilden Zonen erhöhter Flächenpressung und leichterer Verformbarkeit. Ein derartiger Aufbau der Flachdichtungen führt dazu, daß schon beim Einbau eine bessere Abdichtung erreicht wird.

Die US-A-2,127,372 beschreibt eine Dichtung, bei der über die gesamte Dichtfläche Wellungen oder Einkerbungen vorgesehen sind. Es werden keine Dichtstege beschrieben, die nur auf den Hauptdichtflächen angeordnet sind. Außerdem ist kein Verhältnis der Breite der Dichtstege zur Breite der Hauptdichtflächen definiert.

Bei den in der DE-A-42 40 661 beschriebenen Dichtungen ist ebenfalls die gesamte Dichtungsoberfläche mit Erhebungen und Vertiefungen versehen. Auch hier fehlt eine Definition der Breite der Dichtstege zur Breite der Hauptdichtflächen der Dichtung.

Die EP-A-O 499 551 beschreibt Erhebungen, deren Höhe in bezug auf die Dicke der Dichtung definiert wird. Auch hier fehlt der Bezug der Breite der Dichtstege zur Breite der Hauptdichtflächen.

Die Erfindung soll im folgenden anhand von einstückigen Dichtungen aus druckfestem, nicht verformbaren Werkstoff beschrieben werden, ohne deshalb auf solche Dichtungen beschränkt zu sein. Für die anderen, oben genannten Typen von Flachdichtungen gilt das nachfolgend Dargelegte entsprechend.

Die im folgenden angesprochenen einstückigen, druckfesten Flachdichtungen besitzen eine reliefartige Oberflächenstruktur. Im Unterschied zu anderen Dichtungen sind sie so geformt, daß sie bereits vor dem Einbau an die Topographie der abzudichtenden Gegenflächen angepaßt sind. Im Einbauzustand und unter Betriebsbedingungen ist eine solche Flachdichtung druckfest und nicht dickenverformbar.

Die reliefartigen Funktionsflächen dieser erfindungsgemäßen Flachdichtungen weisen Hauptdichtflächen auf, die dichtende und tragende Funktion haben und dazu dienen, die Vorspannungen aufzunehmen, die durch die Schraubenkräfte entstehen. Sie sind somit zugleich Dichtflächen und Stützflächen. Diese Hauptdichtflächen sind in den erfindungsgemäßen Flachdichtungen so breit ausgelegt, daß ihre Flächenpressung relativ niedrig ist. Innerhalb der Hauptdichtflächen befinden sich ein oder mehrere erhabene Dichtstege. Diese Dichtstege sind verglichen mit der Breite der Hauptdichtfläche sehr schmal, und sie sind ebenfalls nur um einen geringen Höhenunterschied über die Hauptdichtfläche herausgehoben.
Im Bereich dieser Dichtstege entsteht eine Zone erhöhter Flächenpressung und leichterer Verformbarkeit verglichen mit dem übrigen Bereich der Funktionsflächen. Durch diese leichtere Verformbarkeit und höhere Flächenpressung kann bereits beim Einbau eine bessere Abdichtung erreicht werden.

Die Dichtigkeit kann durch das Aufbringen einer Beschichtung weiter erhöht werden. Durch die erfindungsgemäße Ausgestaltung der Funktionsflächen ist es möglich, eine wesentlich härtere und im Dauerbetrieb beständigere Beschichtung zu wählen, so daß mit der Flachdichtung von Anfang an eine bessere Dichtigkeit erzielt wird.

Die erfindungsgemäße Flachdichtung ermöglicht also einerseits bereits beim Einbau eine hervorragende Mikroabdichtung, andererseits kann das Problem des Wegfließens der Beschichtung vermieden werden, so daß auch bei Dauerbetrieb unter hoher Temperatur- und Druckbelastung eine ausgezeichnete Dichtigkeit gewährleistet ist.

Zwar ist es grundsätzlich bekannt, daß das Hinzufügen schmaler, erhabener Dichtflächen bei gleicher Dichtkraft zu einer Verbesserung der Abdichteigenschaften führen kann. Der wesentliche Unterschied zwischen den erfindungsgemäßen Dichtungen und denjenigen des Standes der Technik besteht jedoch in den Abmessungen der Dichtstege. Erfindungsgemäß entscheidend ist, daß die Dichtstege nur wenig über die Hauptdichtflächen der Dichtungsoberfläche erhaben und verglichen zur Breite der Hauptdichtflächen sehr schmal sind. Beispielsweise besitzen die Dichtstege bei Zylinderkopfdichtungen, deren Hauptdichtflächen üblicherweise eine Breite von 1,3 bis 3 mm haben, im allgemeinen eine Breite von 0,1 bis 0,5 mm. Vorzugsweise beträgt die Breite 0,3 bis 0,4 mm. Die Höhe der Dichtstege beträgt in diesem Fall üblicherweise 0,01 bis 0,03 mm.
Überraschenderweise reichen jedoch bereits diese geringen Abmessungen der Dichtstege aus, um Flächenpressung und Verformbarkeit in diesem Bereich so zu erhöhen, daß die Mikroabdichtung erheblich verbessert werden kann. Dabei wird andererseits aber vermieden, daß sich die Dichtstege in die abzudichtende Gegenfläche eingraben.

Gegenüber üblichen Mehrlagenstahldichtungen besitzt die erfindungsgemäße einstückige Flachdichtung den Vorteil, wesentlich einfacher aufgebaut zu sein. Der einstückige Aufbau erfordert keine zusätzlichen Arbeitsschritte beim Anbringen weiterer Abdichtungen oder Einfassungen aus einem anderen Material.

Auch bei Mehrlagendichtungen sind Kombinationen von Stützlinien und Dichtflächen, allerdings in voneinander getrennter Form, bekannt. So kann beispielsweise eine Abdichtsicke mit schmaler Anpreßfläche hinter einer Stützfläche angeordnet sein. Bei Dichtungen mit vorgegebener Dickenverteilung verhindert die Stützfläche wegen der unter allen Betriebsbedingungen vorhandenen Vorspannung vertikale Bewegungen in diesem Bereich. Im an die Stützflächen angrenzenden Bereich können im Betrieb jedoch durch Winkelbewegungen vertikale Dichtspaltbewegungen auftreten. Deshalb müssen bei einer solchen Nebeneinanderanordnung die schmalen Dichtflächen so konstruiert sein, daß sie kleinen Verschiebungen elastisch folgen können. Bei der erfindungsgemäßen Konstruktion ist dies nicht erforderlich, da die Dichtflächen innerhalb der Stützflächen liegen und diese die nötige Bewegungslosigkeit gewährleisten.

Auch bei den elastisch verformbaren Dichtungen lassen sich jedoch Verbesserungen der Abdichtung erzielen, indem auf den Hauptdichtflächen zusätzlich Dichtstege angebracht sind. Die Dichtstege sind, wie gesagt, im Unterschied zu bisher bekannten Ausgestaltungen in ihren Abmessungen wesentlich kleiner. Durch die erhöhte Flächenpressung und leichtere Verformbarkeit im Bereich der Dichtstege kann die Abdichtung im Einbaustadium gegenüber den üblichen elastisch verformbaren Dichtungen noch verbessert werden.

Die erfindungsgemäßen Flachdichtungen sollen nun anhand der Zeichnungen näher erläutert werden. Darin zeigen schematisch
- Fig. 1 bis 3: Teilquerschnitte durch eine erfindungsgemäße Flachdichtung; die Figuren auf der rechten Seite sind Vergrößerungen der Darstellung links im Bereich der eingekreisten Teilstücke;
- Fig. 4: einen Teilquerschnitt durch eine weitere erfindungsgemäße Dichtung im an den Brennraum angrenzenden Bereich;
- Fig. 5: eine Draufsicht auf den in Fig. 4 dargestellten Auschnitt der Dichtung und
- Fig. 6 und 7: weitere Ausgestaltungsformen des in Fig. 5 gezeigten Dichtungsbereichs.

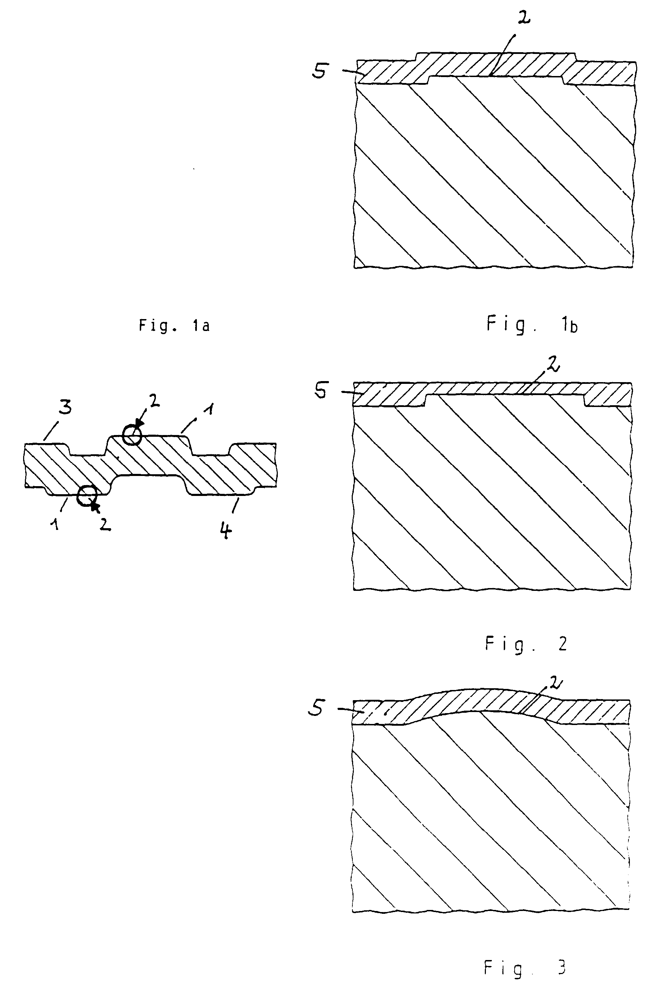

Fig. 1 bis 3 zeigen Teil-Querschnitte durch erfindungsgemäße einstückige Flachdichtungen, zum Beispiel im Bereich ihrer Funktionsflächen, z.B. in der Nähe einer Durchgangsöffnung. Die Durchgangsöffnung kann beispielsweise die Brennkammer oder ein Öl- oder Kühlflüssigkeitsdurchgang einer Zylinderkopfdichtung sein. Die rechten Abbildungen sind Vergrößerungen der Darstellung der linken Seite in den eingekreisten Bereichen, in denen Dichtstege angeordnet sind, und stellen unterschiedliche mögliche Ausführungsformen in diesem Bereich dar.

In der in der letzten Abbildung dargestellten Dichtung weisen die Hauptdichtflächen 1 an Oberseite 3 und Unterseite 4 der Dichtung je einen Dichtsteg 2 auf. Es ist jedoch auch möglich, einen oder mehrere Dichtstege nur auf einer Seite der Dichtung anzubringen oder auf beiden Seiten der Dichtung mehr als einen Dichtsteg pro Stützfläche anzuordnen. Ein Dichtsteg kann sowohl in sich geschlossen oder auch abschnittsweise innerhalb einer Hauptdichtfläche verlaufen.
Die Dichtstege können kreisförmig um die jeweilige abzudichtende Öffnung angeordnet sein. Vorzugsweise umlaufen sie die Durchgangsöffnung ringförmig. In letzterem Fall kann der Dichtsteg um einzelne Abschnitte des Umfanges der Durchgangsöffnung angeordnet sein oder sich, was bevorzugt ist, um den gesamten Umfang der Durchgangsöffnung erstrekken.

Breite und Höhe der Dichtstege sind verglichen mit den Abmessungen der Hauptdichtflächen gering. Größenordnungsmäßig ist die Breite der Dichtstege um etwa eine Zehnerpotenz geringer als die Breite der Hauptdichtfläche, während die Höhe der Dichtstege um etwa eine Zehnerpotenz geringer ist als ihre Breite. Wie oben erwähnt, liegt die Breite der Dichtstege bei einer Zylinderkopfdichtung mit einer Hauptdichtfläche von 1,3 bis 3 mm Breite zweckmäßig im Bereich von 0,1 bis 0,5 mm, vorzugsweise zwischen 0,3 und 0,4 mm. Die Höhe der Dichtstege beträgt in diesem Fall zweckmäßig 0,01 bis 0,03 mm.

Durch die unterschiedliche Gestaltung der beiden Oberflächen auf Ober- und Unterseite der Dichtung kann die Flachdichtung gezielt an unterschiedliche Materialien der abzudichtenden Gegenflächen angepaßt werden. Ein Beispiel wäre eine Zylinderkopfdichtung, die zwischen einen Graugußblock und einen Aluminiumkopf eingebaut werden soll. In solchen Fällen können sowohl die Anzahl der Dichtstege als auch deren Höhe und Breite auf den verschiedenen Seiten der Dichtung unterschiedlich gewählt werden. Werden mehrere Dichtstege auf einer Seite einer Hauptdichtfläche angeordnet, können die Dichtstege entweder gleich hoch und breit oder von unterschiedlicher Höhe und/oder Breite sein.

Durch die beschriebene Ausgestaltung der Funktionsflächen tritt beim Einbau der Dichtung im Bereich der Dichtstege 2 eine wesentlich höhere Flächenpressung auf als im Bereich der übrigen Funktionsflächen und damit werden diese Bereiche leichter verformbar, wodurch bereits beim Einbau eine bessere Abdichtung erreicht wird. In den ersten Betriebsstunden läuft sich die Dichtung ein, wobei die Dichtstege in ihrer Höhe ganz oder teilweise abgearbeitet werden können. Durch die vergleichsweise geringe Höhe der Dichtstege wird jedoch ein Eingraben in die Gegenflächen verhindert.

Die Mikroabdichtung kann durch Aufbringen einer Beschichtung 5 auf eine oder beide Seiten der Dichtung weiter verbessert werden.

Als Beschichtungsmaterial kann jedes zur Beschichtung von Dichtungen üblicherweise verwendete Material eingesetzt werden. Beispielsweise kann die Funktionsfläche mit hitzebeständigem Kunststoff beschichtet werden. Gut geeignet sind auch eine oder mehrere Deckschichten aus weicherem Metall. Für die erfindungsgemäßen Dichtungen wird vorzugsweise eine Beschichtung aus hitzebeständigem Kunststoff gewählt.

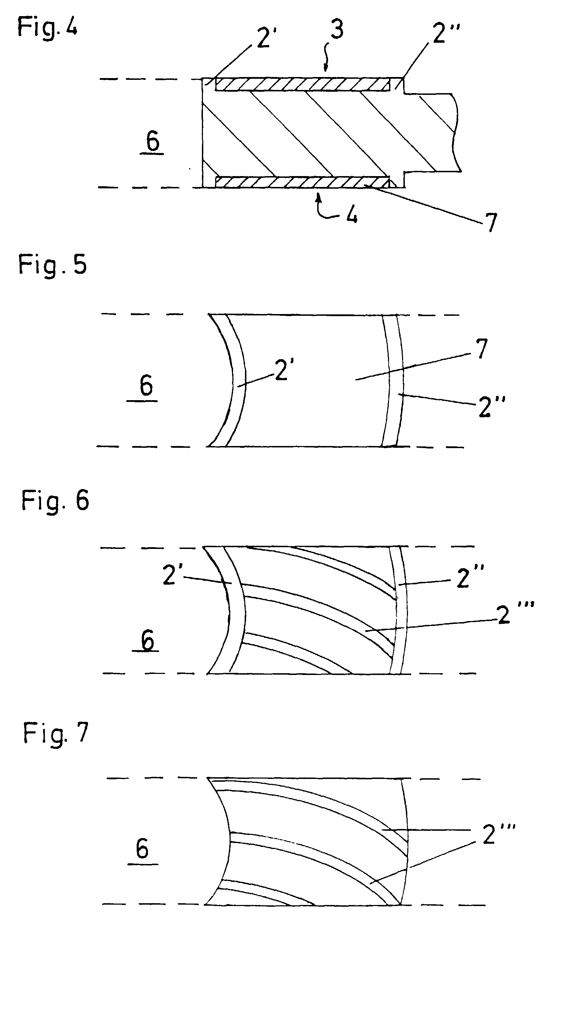

Die Deckschicht 5 kann von gleichmäßiger Dicke oder unterschiedlich dick sein. Fig. 1 zeigt Funktionsflächen mit einer eckigen Dichtfläche und einer Beschichtung gleichmäßiger Dicke. Im Unterschied dazu sind die Funktionsflächen in Fig. 2 mit einer Deckschicht unterschiedlicher Dicke beschichtet, so daß die Dichtung insgesamt eine geschlossene Decklinie erhält.

Gleichmäßig dicke Beschichtungen können durch Aufbringen des Beschichtungsmaterials als Pulver hergestellt werden. Schichten ungleichmäßiger Dicke können erzielt werden, indem das Beschichtungsmaterial flüssig aufgetragen wird. Die Beschichtung wird dann im Bereich der vorspringenden Dichtstege dünner als im übrigen Bereich der Funktionsflächen. Vorzugsweise erhalten Funktionsflächen mit nur geringfügig erhöhten Dichtstegen eine Beschichtung konstanter Schichtdicke, während Funktionsflächen mit stärker herausgehobenen Dichtstegen Beschichtungen ungleichmäßiger Schichtdicke erhalten, die zur Ausbildung einer geschlossenen Decklinie führen.

Fig. 3 zeigt eine Funktionsfläche, die wiederum mit einer Schicht konstanter Schichtdicke überzogen ist. Im Unterschied zu Fig. 1 besitzen die Dichtstege jedoch abgerundete Kanten.

Fig. 4 zeigt eine weitere bevorzugte Ausführungsform der erfindungsgemäßen Dichtung und zwar im Teilquerschnitt im unmittelbar an eine Brennraumöffnung 6 angrenzenden Bereich. Die Dichtung weist auf Oberseite 3 und Unterseite 4 je zwei Dichtstege 2', 2" auf, die die Brennraumöffnung 6 ringförmig umgeben, was Fig. 5 zu entnehmen ist, wo ein Dichtungssegment der Dichtung gemäß Fig. 4 in Draufsicht dargestellt ist. Die vorderen Dichtstege 2' verlaufen entlang der vorderen Dichtkante unmittelbar am Brennraumrand. Zwischen vorderen und hinteren Dichtstegen ist ein Material 7 eingeschlossen, das leichter verformbar ist als das es umgebende Dichtungsmaterial. Es kann sich beispielsweise um eine Einlage aus elastomerem Kunststoff oder weichem Metall handeln.

Die die Einlage 7 umgebenden Dichtstege 2', 2" schützen diese vor zu hoher mechanischer und thermischer Belastung, die zu schnellem Verschleiß oder Wegfließen der Weichstoffeinlage 7 führen können. Dies geschieht beispielsweise dadurch, daß die vorderen Dichtstege die Weichstoffeinlage 7 von den heißen Verbrennungsgasen im Brennraum abschirmen und Wärme in Richtung auf Zylinderkopf und Zylinderblock ableiten. In dem in Fig. 4 und 5 gezeigten Fall bilden die Dichtstege geschlossene Linien, die die Abdichtung zum Brennraum unterstützen und dabei die Weichstoffeinlage vor starker mechanischer Beanspruchung schützen.
Diese Wirkung kann durch weitere Dichtstege verstärkt werden, die zwischen vorderen und hinteren Dichtstegen verlaufen.

Fig. 6 zeigt ein Beispiel mit quer zu vorderen und hinteren Dichtstegen 2', 2" verlaufenden Dichtstegen 2'". Zahl, Form und Verlauf der Dichtstege 2'" können je nach Anforderung variiert werden.

Eine andere Variante ist Fig. 7 zu entnehmen. Sie entspricht derjenigen von Fig. 6, abgesehen davon, daß die dichtenden Dichtstege 2' und 2" weggelassen sind.

Auch die in Fig. 4 bis 7 abgebildeten Dichtungen können zur Verbesserung der Mikroabdichtung ein- oder beidseitig und zusätzlich zur Weichstoffeinlage 7 ganz oder teilweise mit einer Beschichtung versehen sein. Zur näheren Erläuterung wird auf das zu Fig. 1 bis 3 Gesagte verwiesen.

Die beschriebenen Flachdichtungen können auf übliche Weise durch im Stand der Technik bekannte Verfahren hergestellt werden. Beispielsweise kann der erhöhte Dichtsteg spanend oder spanlos aus der Hauptdichtfläche herausgearbeitet werden.

Besonders vorteilhaft ist die Herstellung mit Hilfe eines Prägeverfahrens. Zur Herstellung einer Prägeform kann jedes geeignete Verfahren eingesetzt werden. Beispielsweise können die Vertiefungen in der Prägeform durch chemische Abtragung, z.B. mittels eines Ätz- oder Oxidationsvorgangs, oder mit Hilfe der Lasertechnik erzeugt werden. Sind die Anforderungen an die Genauigkeit besonders hoch, kann auch die Funkenerosion zur Erzeugung der Vertiefungen verwendet werden.

Es hat sich jedoch als besonders zweckmäßig erwiesen, in eine Prägeform, die im Falle einstückiger Dichtungen an die Topographie der abzudichtenden Gegenflächen angepaßt ist, die Erhebungen für die Dichtstege mittels einer Kugel oder eines Rädchens einzurollen oder einzuziehen. Ein derartiges Verfahren ist ebenfalls Gegenstand der Erfindung, siehe Ansprüche 22 bis 25.
Bei diesem Verfahren wird die Kugel oder das Rädchen entlang des gewünschten Bereichs, in dem die Dichtstege liegen sollen, über die vorgefertigte Prägeform geführt. Beispielsweise wird eine gehärtete, in einem Sackloch angeordnete Kugel in einer Spindel einer Universalfräsmaschine befestigt und entlang der xy-Koordinaten über die in der Prägeform wiedergegebenen Funktionsflächen der Flachdichtung geführt, so daß Eindrücke für die Dichtstege in der gewünschten Lage und Breite entstehen. Bei diesem Prägevorgang wird die Spindel nicht gedreht. Die Tiefe des Eindrucks (d.h. die Höhe der Dichtstege in der Flachdichtung) wird in erster Linie durch die Einstellung der auf die Kugel wirkenden Federkraft bei konstantem Höhenunterschied der z-Achse gesteuert.

Die Kugel wird also mit vorgegebener Kraft über die Prägeform geführt, so daß relativ zur Höhe der Prägefläche (Funktionsfläche) eine Einprägung von im wesentlichen konstanter Tiefe erzeugt wird.

Anstelle der Kugel kann auch ein Rädchen verwendet werden, das entlang der gewünschten x-y-Koordinaten über die Prägefläche gezogen wird. Der Radmantel kann unterschiedlich ausgestaltet sein und beispielsweise ein spitzes, trapezförmiges oder abgerundetes Profil besitzen.

Das geschilderte Verfahren ermöglicht es, auch bei Verwendung bereits gehärteter Prägeplatten eine sehr exakte Form für die Dichtstege einzuarbeiten.

## Patentansprüche

1. Flachdichtung, welche wenigstens eine Durchgangsöffnung (6) aufweist, die von einer Hauptdichtfläche (1) abgedichtet wird, welche dichtende und tragende Funktion hat und die Vorspannung aufnimmt,
dadurch **gekennzeichnet,**
daß auf der Hauptdichtfläche (1) einer oder mehere Dichtstege (2) angeordnet sind, die sich um den gesamten Umfang oder Abschnitte des Umfangs der Durchgangsöffnung (6) erstrecken und deren Breite in der Größenordnung um eine Zehnerpotenz geringer ist als die Breite der Hauptdichtfläche (1) und deren Höhe in der Größenordnung um eine Zehnerpotenz geringer ist als ihre Breite.

2. Flachdichtung gemäß Anspruch 1,
dadurch **gekennzeichnet,**
daß die Dichtung eine Zylinderkopfdichtung oder Auspuffdichtung ist.

3. Zylinderkopfdichtung nach Anspruch 2,
dadurch **gekennzeichnet,**
daß der Dichtsteg (2) bei einer Breite der Hauptdichtfläche (1) von 1,3 bis 3 mm eine Breite von 0,1 bis 0,5 mm, vorzugsweise 0,3 bis 0,4 mm, und eine Höhe von 0,01 bis 0,03 mm besitzt.

4. Flachdichtung gemäß einem der Ansprüche 1 bis 3,
dadurch **gekennzeichnet,**
daß ein oder mehrere Dichtstege (2) als Dichtringe ausgeführt sind, die die Durchgangsöffnung (6) in der Flachdichtung vollständig umgeben.

5. Flachdichtung gemäß Anspruch 4,
dadurch **gekennzeichnet,**
daß sie zwei Dichtstege (2) aufweist, die konzentrisch um eine Durchgangsöffnung (6) verlaufen.

6. Flachdichtung gemäß Anspruch 4 oder 5,
dadurch **gekennzeichnet,**
daß ein Dichtsteg (2) am Rand der Durchgangsöffnung (6) verläuft.

7. Flachdichtung gemäß Anspruch 5 oder 6,
dadurch **gekennzeichnet,**
daß zwischen zwei Dichtstegen (2', 2") eine Weichestoffeinlage (7) angeordnet ist.

8. Flachdichtung gemäß Anspruch 7,
dadurch **gekennzeichnet,**
daß die Weichstoffeinlage (7) aus weichem Metall oder elastomerem Kunststoff besteht.

9. Flachdichtung gemäß einem der Ansprüche 4 bis 8,
dadurch **gekennzeichnet,**
daß Dichtstege (2) auf beiden Seiten (3, 4) der Dichtung angeordnet sind.

10. Flachdichtung gemäß einem der Ansprüche 4 bis 9,
dadurch **gekennzeichnet,**
daß zwischen zwei ringförmigen Dichtstegen (2', 2") weitere Dichtstege (2"') angeordnet sind, die eine andere Orientierung aufweisen als die ringförmigen Dichtstege (2', 2").

11. Flachdichtung gemäß Anspruch 10,
dadurch **gekennzeichnet,**
daß die weiteren Dichtstege (2"') im wesentlichen parallel zueinander und quer oder schräg zu den ringförmigen Dichtstegen verlaufen.

12. Flachdichtung gemäß einem der Ansprüche 1 bis 3,
dadurch **gekennzeichnet,**
daß sie eine Vielzahl von Dichtstegen (2"') aufweist, die ausgehend von einer Durchgangsöffnung im wesentlichen radial oder schräg nach außen verlaufen.

13. Flachdichtung gemäß Anspruch 12,
dadurch **gekennzeichnet,**
daß die Dichtstege (2"') im wesentlichen parallel verlaufen.

14. Flachdichtung gemäß Anspruch 12 oder 13,
dadurch **gekennzeichnet,**
daß zwischen den Dichtstegen (2"') eine Weichstoffeinlage (7) angeordnet ist.

15. Flachdichtung gemäß Anspruch 14,
dadurch **gekennzeichnet,**
daß die Weichstoffeinlage (7) aus weichem Metall oder elastomerem Kunststoff besteht.

16. Flachdichtung gemäß einem der Ansprüche 4 bis 15, nämlich Zylinderkopfdichtung,
dadurch **gekennzeichnet,**
daß die Durchgangsöffnung (6) eine Brennraumöffnung ist.

17. Flachdichtung gemäß einem der Ansprüche 1 bis 16,
dadurch **gekennzeichnet,**
daß der Dichtsteg (2) spanend oder spanlos aus der Hauptdichtfläche (1) herausgearbeitet ist.

18. Flachdichtung gemäß einem der Ansprüche 1 bis 17,
dadurch **gekennzeichnet,**
daß sie aus Metall, beispielsweise Aluminium, besteht.

19. Flachdichtung gemäß einem der Ansprüche 1 bis 18,
dadurch **gekennzeichnet,**
daß die Oberfläche (3, 4) der Dichtung ganz oder teilweise mit einer Beschichtung (5) versehen ist.

20. Flachdichtung gemäß Anspruch 19,
dadurch **gekennzeichnet,**
daß die Beschichtung (5) aus Kunststoff oder Metall besteht, die weicher sind als das Material, aus dem die Dichtung hergestellt ist.

21. Flachdichtung gemäß Anspruch 20 mit einer Kunststoffbeschichtung (5), die bei geringer Höhe der Dichtstege (2) eine konstante Schichtdicke besitzt und bei größerer Höhe der Dichtstege (2) eine Schichtdicke aufweist, die im Bereich der Dichtstege (2) geringer ist als im Bereich der Hauptdichtflächen (1), so daß eine gleichmäßig hohe Decklinie entsteht.

22. Verfahren zur Erzeugung einer Prägeform für eine Flachdichtung gemäß Anspruch 1, welche Vertiefungen für Dichtstege (2) mit einer im wesentlichen konstanten Tiefe relativ zur Höhe der umliegenden Prägefläche aufweist,
dadurch **gekennzeichnet,**
daß die Vertiefungen erzeugt werden, indem man eine Kugel oder ein Rädchen mit einem im wesentlichen konstanten Druck entlang der gewünschten x-y-Koordinaten über die Prägeform führt.

23. Verfahren gemäß Anspruch 22,
dadurch **gekennzeichnet,**
daß die Vertiefungen mit einer Kugel aus gehärtetem Metall, die in einem Sackloch angeordnet und in einer Spindel einer Universälfräsmaschine befestigt ist, erzeugt werden.

24. Verfahren gemäß Anspruch 22,
dadurch **gekennzeichnet,**
daß die Vertiefungen mit einem Rädchen erzeugt werden, das über die Oberfläche der Prägeform gezogen wird.

25. Verfahren gemäß Anspruch 24,
dadurch **gekennzeichnet,**
daß das Rädchen einen Radmantel mit spitzem, trapezförmigem oder abgerundetem Profil besitzt.

## Claims

1. Flat gasket comprising at least one through-opening (6), which is sealed by a main sealing face (1), which has a sealing and bearing function and which absorbs the preliminary tension,
**characterized** in that
on said main sealing face (1) one or several sealing ridges (2) are arranged, which extend around the entire circumference or sections of the circumference of said through-opening (6) and the width of which is smaller by an order of magnitude of power of ten than the width of said main sealing face (1) and the height of which is smaller by an order of magnitude of power of ten than their width.

2. Flat gasket according to claim 1,
**characterized** in that
said gasket is a cylinder head gasket or an exhaust gasket.

3. Cylinder head gasket according to claim 2,
**characterized** in that
for a width of said main sealing face (1) of 1.3 to 3 mm said sealing ridge (2) has a width of 0.1 to 0.5 mm, preferably 0.3 to 0.4 mm, and a height of 0.01 to 0.03 mm.

4. Flat gasket according to any of the claims 1 to 3,
**characterized** in that
one or several sealing ridges (2) are constructed as sealing rings, which completely surround said through-opening (6) in said flat gasket.

5. Flat gasket according to claim 4,
**characterized** in that
it comprises two sealing ridges (2), which are arranged concentrically around a through-opening (6).

6. Flat gasket according to claim 4 or 5,
**characterized** in that
one sealing ridge (2) is arranged at the edge of said through-opening (6).

7. Flat gasket according to claim 5 or 6,
**characterized** in that
between two sealing ridges (2', 2'') a soft material inlay (7) is arranged.

8. Flat gasket according to claim 7,
**characterized** in that
said soft material inlay (7) is made of a soft metal or elastomeric plastic.

9. Flat gasket according to any of the claims 4 to 8,
**characterized** in that
sealing ridges (2) are arranged on both sides (3, 4) of said gasket.

10. Flat gasket according to any of the claims 4 to 9,
**characterized** in that
between two annular sealing ridges (2', 2'') are arranged additional sealing ridges (2''') having a different orientation than said annular sealing ridges (2', 2'').

11. Flat gasket according to claim 10,
**characterized** in that
said additional sealing ridges (2''') essentially run parallel to each other and transversely or diagonally to said annular sealing ridges.

12. Flat gasket according to any of the claims 1 to 3,
**characterized** in that
it comprises a plurality of sealing ridges (2'''), which, starting from a through-opening, essentially run outwards radially or at an angle.

13. Flat gasket according to claim 12,
**characterized** in that
the sealing ridges (2''') essentially run parallel.

14. Flat gasket according to claim 12 or 13,
**characterized** in that
between said sealing ridges (2''') is arranged a soft material inlay (7).

15. Flat gasket according to claim 14,
**characterized** in that
said soft material inlay (7) is made of soft metal or elastomeric plastic.

16. Flat gasket according to any of the claims 4 to 15, namely a cylinder head gasket,
**characterized** in that
said through-opening (6) is a combustion chamber opening.

17. Flat gasket according to any of the claims 1 to 16,
**characterized** in that
said sealing ridge (2) is fabricated out of said main sealing face (1) be removing material or by forming without removing material.

18. Flat gasket according to any of the claims 1 to 17,
**characterized** in that
it is made of metal, for example aluminium.

19. Flat gasket according to any of the claims 1 to 18,
**characterized** in that
said surface (3, 4) of said gasket is provided fully or partially with a coating (5).

20. Flat gasket according to claim 19,
**characterized** in that
said coating (5) is made of plastic or metal, which are softer than the material from which said gasket is manufactured.

21. Flat gasket according to claim 20,
having a plastic coating (5), which, for a reduced height of said sealing ridges (2), has a uniform coat thickness and which, for a greater height of said sealing ridges (2), has a coat thickness which is less in the region of said sealing ridges (2) than in the region of said main sealing faces (1), so that a uniformly thick coating line results.

22. Method for producing a stamping mould for a flat gasket according to claim 1 having depressions for sealing ridges (2) with an essentially uniform depth relative to the height of the surrounding stamping surface,
**characterized** in that
the depressions are produced by a ball or a small wheel being guided over the stamping mould along the required x-y coordinates under an essentially constant pressure.

23. Method according to claim 22,
**characterized** in that
said depressions are produced using a ball made of hardened metal, which is arranged in a blind hole and is fixed in a quill of a universal milling machine.

24. Method according to claim 22,
**characterized** in that
said depressions are produced using a small wheel, which is drawn over the surface of said stamping mould.

25. Method according to claim 24,
**characterized** in that
said small wheel has a wheel envelope having a pointed, trapezoidal or rounded-off profile.

## Revendications

1. Garniture d'étanchéité plate, qui présente au moins une ouverture de passage (6) qui est étanchée par une surface principale d'étanchéité (1), laquelle a une fonction d'étanchéité et de soutien et supporte la précontrainte, ***caractérisée en ce que*** sur la surface principale d'étanchéité (1) sont placées une ou plusieurs barrettes d'étanchéité (2), qui s'étendent autour de toute la périphérie ou de sections de la périphérie de l'ouverture de passage (6) et dont la largeur est d'un ordre de grandeur inférieur d'une puissance de dix à celui de la largeur de la surface principale d'étanchéité (1) et dont la hauteur est d'un ordre de grandeur inférieur d'une puissance de dix à celui de leur largeur.

2. Garniture d'étanchéité plate selon la Revendication 1, ***caractérisée en ce que*** la garniture d'étanchéité est une garniture d'étanchéité pour tête de cylindre ou pour échappement.

3. Garniture d'étanchéité plate selon la Revendication 2, ***caractérisée en ce que*** la barrette d'étanchéité (2) présente. pour une largeur de la surface principale d'étanchéité (1) de 1,3 à 3 mm. une largeur de 0,1 à 0,5 mm, de préférence de 0.3 à 0,4 mm. et une hauteur de 0,01 à 0,03 mm.

4. Garniture d'étanchéité plate selon l'une quelconque des Revendications 1 à 3, ***caractérisée en ce qu'*** une ou plusieurs barrettes d'étanchéité (2) sont conformées en bagues d'étanchéité qui entourent complètement l'ouverture de passage (6) présente dans la garniture d'étanchéité.

5. Garniture d'étanchéité plate selon la Revendication 4, ***caractérisée en ce qu'***elle présente deux barrettes d'étanchéité (2), qui s'étendent de manière concentrique autour d'une ouverture de passage (6).

6. Garniture d'étanchéité plate selon la Revendication 4 ou 5, ***caractérisée en ce qu'***une barrette d'étanchéité (2) s'étend au bord de l'ouverture de passage (6).

7. Garniture d'étanchéité plate selon la Revendication 5 ou 6, ***caractérisée en ce qu'***entre deux barrettes d'étanchéité (2', 2") est placé un insert (7) en matière tendre.

8. Garniture d'étanchéité plate selon la Revendication 7, ***caractérisée en ce que*** l'insert en matière tendre (7) se compose d'un métal tendre ou d'une matière synthétique élastomère.

9. Garniture d'étanchéité plate selon l'une quelconque des Revendications 4 à 8, ***caractérisée en ce que*** des barrettes d'étanchéité (2) sont placées des deux côtés (3, 4) de la garniture d'étanchéité.

10. Garniture d'étanchéité plate selon l'une quelconque des Revendications 4 à 9, ***caractérisée en ce qu'***entre deux barrettes d'étanchéité annulaires (2', 2'') sont placées d'autres barrettes d'étanchéité (2"') qui présentent une autre orientation que les barrettes d'étanchéité annulaires (2', 2'').

11. Garniture d'étanchéité plate selon la Revendication 10, ***caractérisée en ce que*** les autres barrettes d'étanchéité (2''') s'étendent pour l'essentiel parallèlement les unes aux autres et transversalement ou à l'oblique par rapport aux barrettes d'étanchéité annulaires.

12. Garniture d'étanchéité plate selon l'une quelconque des Revendications 1 à 3, ***caractérisée en ce qu'***il présente une pluralité de barrettes d'étanchéité (2'''), qui s'étendent pour l'essentiel radialement ou à l'oblique en direction de l'extérieur en partant d'une ouverture de passage.

13. Garniture d'étanchéité plate selon la Revendication 12, ***caractérisée en ce que*** les barrettes d'étanchéité (2''') s'étendent sensiblement parallèlement.

14. Garniture d'étanchéité plate selon la Revendication 12 ou 13. ***caractérisée en ce qu'***entre les barrettes d'étanchéité (2"') est placé un insert (7) en matière tendre.

15. Garniture d'étanchéité plate selon la Revendication 14, ***caractérisée en ce que*** l'insert (7) en matière tendre se compose d'un métal tendre ou d'une materière synthetique elastomère.

16. Garniture d'étanchéité plate selon l'une quelconque des Revendications 4 à 15, c'est-à-dire
une garniture d'étanchéité pour tête de cylindre, ***caractérisée en ce que*** l'ouverture de passage (6) est une ouverture de chambre de combustion.

17. Garniture d'étanchéité plate selon l'une quelconque des Revendications 1 à 16, ***caractérisée en ce que*** la barrette d'étanchéité (2) est réalisée par enlèvement de coupeaux ou sans enlèvement de coupeaux à partir de la surface principale d'étanchéité.

18. Garniture d'étanchéité plate selon l'une quelconque des Revendications 1 à 17, ***caractérisée en ce qu'***elle se compose de métal, par exemple de l'aluminium.

19. Garniture d'étanchéité plate selon l'une quelconque des Revendications 1 à 18, ***caractérisée en ce que*** la surface (3, 4) du joint est munie totalement ou partiellement d'un revêtement (5).

20. Garniture d'étanchéité plate selon la Revendication 19, ***caractérisée en ce que*** le revêtement (5) se compose d'une matière synthétique ou d'un métal, qui sont plus tendres que le matériau à partir duquel est fabriquée la garniture d'étanchéité.

21. Garniture d'étanchéité plate selon la Revendication 20, avec un revêtement (5) en matière synthétique qui, pour une faible hauteur des barrettes d'étanchéité (2), présente une épaisseur de couche constante et, pour une hauteur importante des barrettes d'étanchéité (2), présente une épaisseur de couche qui est plus faible au niveau des barrettes d'étanchéité (2) qu'au niveau des surfaces principales d'étanchéité (1), de sorte qu'il se forme une ligne de couverture de hauteur uniforme.

22. Procédé de fabrication d'une matrice d'estompage pour une garniture d'étanchéité plate selon la Revendication 1, qui présente des renfoncements pour des barrettes d'étanchéité (2), d'une profondeur sensiblement constante, par rapport à la hauteur de la surface d'estompage environnante, ***caractérisé en ce que*** les renfoncements sont produits en faisant passer une bille ou une roulette avec une pression sensiblement constante sur la matrice d'estampage, le long des coordonnées x-y souhaitées.

23. Procédé selon la Revendication 22, ***caractérisé en ce que*** les renfoncements sont produits avec une bille en métal durci, qui est placée dans un trou borgne et fixée dans la broche d'une fraiseuse universelle.

24. Procédé selon la Revendication 22, ***caractérisé en ce que*** les renfoncements sont produits avec une roulette que l'on tire sur la surface de la matrice d'estampage.

25. Procédé selon la Revendication 24, ***caractérisé en ce que*** la roulette présente une enveloppe de roulette à profil pointu, trapézoïdal ou arrondi.
